# EUROPÄISCHE PATENTSCHRIFT

(11) **EP 1 071 901 B1**
(45) Veröffentlichungstag und Bekanntmachung des Hinweises auf die Patenterteilung: **05.03.2003**
(21) Anmeldenummer: 99916912.1
(22) Anmeldetag: 10.04.1999
(51) Int. Cl.: F16K 41/10

(54) **HUBVENTIL**
GLOBE VALVE
SOUPAPE DE LEVEE

(30) Priorität: 11.04.1998 DE 19816378; 14.10.1998 DE 19847294; 12.02.1999 DE 19905831; 17.03.1999 EP 99105410
(43) Veröffentlichungstag der Anmeldung: 31.01.2001
(73) Patentinhaber: TUCHENHAGEN GmbH, 21514 Büchen (DE)
(72) Erfinder: COURA, Herbert, Robert, D-21514 Büchen (DE); RAUEN, Wolfgang, D-24149 Kiel (DE); SAUER, Martin, D-86687 Kaisheim (DE); SCHMID, Werner, D-89522 Heidenheim (DE)
(74) Vertreter: Graalfs, Edo
(86) Internationale Anmeldenummer: EP9902435
(87) Internationale Veröffentlichungsnummer: WO99053231

(56) Entgegenhaltungen:
- DE-B- 1 096 701
- GB-A- 1 018 758
- GB-A- 2 002 877
- US-A- 2 427 441

## Beschreibung

Die Erfindung betrifft ein Hubventil mit einem Balg zur Abdichtung einer Ventilstangendurchführung nach dem Oberbegriff des Anspruchs 1.

Hubventile der gattungsgemäßen Art werden vorzugsweise als Absperrventile ausgeführt und entsprechend eingesetzt. Dabei ist wenigstens eine Komponente der Öffnungs- und Schließbewegung des Verschlußteils senkrecht zu den Abschlußflächen, den Sitzflächen, gerichtet. Die Durchführung der das Verschlußteil betätigenden Ventilstange durch das Ventilgehäuse wird mit einem Balg überbrückt, der die Ventilstange konzentrisch umschließt. Dieser Balg, der als Faltenbalg (DE 32 15 799 C2), Wellrohr oder Membran (EP 0 508 658 B1) ausgebildet sein kann, erstreckt sich in der Regel vom Verschlußteil bis zu jenem Bereich des Ventilgehäuses, weiches von der Ventilstange durchdrungen ist.

Eine derartige Ventilstangenabdichtung mittels eines Balges hat den Vorteil, daß kein Dichtungsspalt zwischen der in axialer Richtung verschieblichen Ventilstange und dem ortsfesten Ventilgehäuse vorhanden ist, in den durch die Relativbewegung der Ventilstange gegenüber dem Ventilgehäuse eine Produktverschleppung stattfinden kann. Es ist bekannt, daß derartige Dichtungsspalte sanitäre Problemzonen darstellen, in denen Bakterien- oder Keimbildung stattfinden kann, wodurch dann infolge der Ventilstangenbewegung, des sog. "Fahrstuhleffektes", Reinfektionen des Produktes im Ventilgehäuse hervorgerufen werden können.

Für hohe sanitäre Ansprüche, insbesondere im Aseptikbereich der Pharma-, Chemie- oder Nahrungsmittelindustrie, ist die Anwendung eines Balges zur Abdichtung einer Ventilstangendurchführung obligatorisch. Aus der vorgenannten DE 32 15 799 C2 ist ein aseptisches Ventil bekannt, das ein mit einem konischen Sitz in einem Ventilgehäuse zusammenwirkendes Verschlußteil mit entsprechender Ringdichtfläche aufweist, wobei das Verschlußteil über eine Spindel an einem Stellantrieb angeschlossen ist und mit einem die Spindel koaxial umgebenden, die Spindelabdichtung bildenden Faltenbalg verbunden ist, der an seinem freien Ende einen zwischen dem eigentlichen Ventilgehäuse und einer Ventillaterne einspannbaren Anschlußflansch mit einer konischen Dichtfläche aufweist, die gegen eine komplementäre Ringsitzfläche des Gehäuses anliegt, wobei das Verschlußstück, der Faltenbalg und sein Anschlußflansch eine ais Ganzes auswechselbare, nach oben offene, rotationssymmetrische Ersatz-Einheit bilden. Dabei ist diese sog. Ersatz-Einheit aus einem Polytetrafluorethylen-Werkstoff (PTFE, beispielsweise Teflon) hergestellt, der als positive Eigenschaften hohe Elastizität, chemische Widerstandsfähigkeit und eine lange Lebensdauer unter Inkaufnahme einer relativ großen plastischen Duktilität (starke Neigung zum "Fließen" bzw. "Kriechen") aufweist.

Die vorgenannte Ersatz-Einheit weist unter anderem die nachfolgend genannten beiden Problemzonen auf.
1. Der Anschlußflansch bildet mit seiner konischen Dichtfläche im Zusammenwirken mit seiner komplementären Ringsitzfläche im Ventilgehäuse einen sensiblen Ringspalt. Damit dieser Ringspalt zwischen Anschlußflansch und den ihn andererseits berandenden ortsfesten Teilen des Ventilgehäuses unter wechselnden Betriebsbedingungen (Druck und Temperatur) nachhaltig dicht bleibt und nicht "arbeitet", wird der Anschlußflansch zwischen dem Ventilgehäuse und einem Gehäuseverschlußteil (Gehäuseoberteil) verpreßt, d.h. der Anschlußflansch wird in seiner Einspannstellung unter Vorspannung gehalten. Nun ist bekannt, daß das eingangs für die Ersatz-Einheit vorzugsweise verwendete Material (PTFE) unter wechselnden Drücken und Temperaturen, über einen längeren Zeitraum gesehen, ein gewisses Kriechverhalten aufweist, wodurch sich die Gestalt des Anschlußflansches geringfügig ändert. Dies führt im Betrieb dazu, daß die eine Aufweitung des Dichtungsspaltes verhindernde, durch die Verpressung erzeugte Vorspannung allmählich nachläßt und der Dichtungsspalt "arbeitet". Dadurch kann es zum Eindringen von Produkt in den "atmenden'' Dichtungsspalt kommen, mit den vorstehend genannten Konsequenzen für die Produktverschleppung und die anschließende Reinfektion.
2. Der aus der DE 32 15 799 C2 bekannte Faltenbalg ist integraler Bestandteil der sog. Ersatz-Einheit, die bei Bedarf im Ventil ausgetauscht werden kann. Hierzu ist es erforderlich, daß die Gehäuseöffnung und damit die mit dieser korrespondierende Abmessung des Anschlußflansches wenigstens so groß wie der äußere Durchmesser des Verschlußteiles ausgeführt sind. Wie die Figur 2 der vorgenannten Druckschrift zeigt, liegen die bei Zugbeanspruchung des Faltenbalges auf den Anschlußflansch wirkenden Zugkräfte und die diesen Kräften entgegengerichteten Reaktionskräfte an der Einspannstelle des Anschlußflansches nicht auf einer gemeinsamen Wirkungslinie, sondern sie haben einen radialen Abstand voneinander. Dieser Abstand und damit das durch dieses Kräftepaar gebildete Biegemoment auf den Anschlußflansch werden in der Regel noch vergrößert, weil man bestrebt ist, aus Festigkeitsgründen den Faltenbalgdurchmesser so klein wie möglich zu bemessen. Dadurch wandert die Angriffsstelle der vom Faltenbalg auf den Anschlußflansch ausgeübten Zugkraft in radialer Richtung weiter nach innen, so daß der vorgenannte radiale Abstand zwischen den beiden Kräften und damit das Biegemoment weiter anwachsen.

Das vorstehend erläuterte Biegemoment führt nun dazu, daß der zwischen dem Gehäuse und dem Gehäuseverschlußteil verpreßte Anschlußflansch zusätzlich zu dieser Druckbeanspruchung noch eine Biegebeanspruchung erfährt, die eine verstärkte Beanspruchung des Materials und damit eine forcierte Gestaltänderung in diesem Bereich hervorruft. Dadurch verschärft sich die vorstehend unter Punkt 1 in Bezug auf den Dichtungsspalt beschriebene kritische Situation.

in der eingangs ebenfalls erwähnten Druckschrift EP 0 508 658 B1, in der eine aseptische Ventilkonstruktion mit einem Balg der gattungsgemäßen Art beschrieben ist, wird das vorstehend erwähnte Problem im Bereich des kritischen Dichtungsspaltes an der konischen Dichtfläche des Anschlußflansches ebenfalls bereits thematisiert. Dort wird zur Entschärfung des auftretenden Problems vorgeschlagen, daß der mit der konischen Dichtfläche des Anschlußflansches korrespondierende komplementäre ringförmige Schultersitz im Ventilgehäuse ganz innen eine Lippe hat, die von der einwärts und aufwärts geneigten Ringfläche des Ventilgehäuses aus nach unten geneigt ist. Eine derartige Maßnahme kann möglicherweise die vorzeitige Aufweitung des Dichtungsspaltes verhindern. Sie stellt jedoch keine nachhaltig wirkende Maßnahme dar, da im Falle eines Kriechens des Balgmaterials an dieser Stelle die notwendige Vorspannung ebenfalls nachläßt und durch keinerlei weitere erkennbare Maßnahmen dauerhaft sichergestellt wird.

Eine befriedigende Lösung des Problems kann nur gelingen, wenn die vorstehend unter den Punkten 1 und 2 als nachteilig beschriebenen Einflußgrößen reduziert werden können und/oder wenn ihnen durch geeignete Maßnahmen entgegengewirkt werden kann.

Der aus der DE 32 15 799 C2 bekannte Faltenbaig umschließt die Ventilstange mit relativ großem radialen Spiel. Letzteres erlaubt zwar ggf. den Einblick und die Eingriffsmöglichkeit in den Balginnenraum und begünstigt damit möglicherweise ein rechtzeitiges Erkennen eines Balgdefektes, es ist jedoch im Hinblick auf die Balgstabilität infolge Angriff der Strömungs- und Druckkräfte aus dem den Balg umgebenden Raum eher ungünstig. Bedingt Abhilfe kann hier entweder eine Verringerung des Balgdurchmessers im Bereich der Balgfalten oder eine Vergrößerung des Stangendurchmessers schaffen. Die erste Maßnahme führt jedoch zu einer größeren Beanspruchung des gehäuseseitigen Anschlußflansches des Faltenbalges mit einem Biegemoment, wodurch der kritische Spalt zwischen der konischen Dichtfläche des Anschlußflansches und seiner komplementären Ringsitzfläche im Gehäuse dynamisch wechseind beansprucht wird. Infolge der bestehenden Fließneigung des Balgmateriales bei hohem Produktdruck und/oder hoher Produkttemperatur besteht die Gefahr einer Aufweitung des Spaltes und eines Eindringens von Produkt in diesen Bereich mit all den bekannten nachteiligen Folgen, unter anderem Keimbildung und Reinfektion des Produktes.

Läßt man die vorgenannte Spaltproblematik im Bereich des Anschlußflansches des Balges einmal außer acht und richtet man sein Augenmerk ausschließlich auf die Erhöhung der Balgstabilität im Bereich der Balgfalten, dann läßt sich diese Erhöhung erzielen durch Verkleinerung des Zwischenraumes zwischen den Balgfalten und der Ventilstange über entweder eine Reduzierung des Balgdurchmessers oder, bei unverändertem Balgdurchmesser, über eine Stützung von innen, beispielsweise durch eine Vergrößerung des Stangendurchmessers oder durch Einziehen eines den Balg eng berandenden Stützrohres
(**DE 42 43 111 A1**).

Bei der Stützung von innen hat sich gezeigt, daß bei Balgmaterialien, die eine starke Neigung zu bleibender Formveränderung unter Beanspruchung, zum sog. "Kriechen" haben, wie beispielsweise Polytetrafluorethylen. die stangennahen Bereiche der Balgfalten durch diese bleibende Formveränderung in zunehmendem Maße an der Stange bzw. dem Stützrohr anliegen, so daß der jeweilige Falteninnenraum, einerseits begrenzt durch die Balgfalte und im Innenbereich durch die Stange bzw. das Stützrohr selbst, eine in sich geschlossene Kaverne bildet, aus der das dort eingeschlossene Medium nicht oder nur unzureichend entweichen kann. Bei dem eingeschlossenen Medium kann es sich entweder um ein Kontroltmedium handeln, mit welchem der Balginnenraum angefüllt ist, und das über geeignete Einrichtungen detektierbar ist, oder um in den Balginnenraum eintretende. durch einen Balgdefekt entstandene Leckagen (beispielsweise Produkt). Eine zuverlässige und zeitnahe Anzeige eines Balgdefektes oder dessen unverzügliche Detektierung ist damit in Frage gestellt.

Zwischen Faltenbalg und Stange besteht infolge der axialen Verschiebung der Stange eine Relativbewegung, die an der Verbindungsstelle zwischen Balg und Stange gegen Null geht und am gehäuseseitigen Ende des Balges ihren größten Wert aufweist. Durch das Anliegen der Balgfalten an der Stange wird infolge der Reibung zwischen Balgfalte und Stange diese Retativbewegung behindert. Dies kann so weit gehen, daß in Bereichen mit geringer Relativbewegung letztere gänzlich unterbleibt und nur die Balgfalten in der Nähe des gehäuseseitigen Anschlusses des Balges die gesamte Verschiebebewegung der Stange ausführen müssen. Dadurch kommt es in diesem Bereich zu höheren Beanspruchungen als bei der Auslegung zugrundegelegt, mit der möglichen Folge eines vorzeitigen Balgbruchs und damit einer Verkürzung der Lebensdauer des Balges.

Es ist Aufgabe der vorliegenden Erfindung, bei einem Hubventil der gattungsgemäßen Art eine zuverlässige, hygienisch einwandfreie und dauerhafte statische Abdichtung des Anschlußflansches der Schließglied-Einheit im Ventilgehäuse unter den auftretenden Kräften bei hinreichend langer Lebensdauer sicherzustellen. Darüber hinaus soll auch bei eng die Ventilstange umschließendem Balg eine zuverlässige Anzeige eines Balgdefektes über die gesamte Lebensdauer des Balges gewährleistet werden.

Diese Aufgabe wird durch die Merkmale des Anspruchs 1 gelöst. Vorteilhafte Ausgestaltungen des vorgeschlagenen Hubventils und seines Balges sind Gegenstand der Unteransprüche.

Um die Aufgabe zu lösen, bedient sich die vorliegende Erfindung im wesentlichen zweier Maßnahmen, wobei jede dieser Maßnahmen bereits eine entscheidende Verbesserung bringt und die Kombination aus beiden Maßnahmen eine optimale und nachhaltige Lösung des Problems sicherstellt.

Die erste Maßnahme besteht darin, die aus der ventilhubbedingten Verformung des Balges und/oder dem jeweiligen Druck im Gehäuse resultierenden Kräfte dort im Ventilgehäuse aufzunehmen, wo sie originär entstehen. Eine biegemomentfreie Aufnahme dieser Kräfte wird bei der vorgeschlagenen Lösung dadurch erreicht, daß der Anschlußflansch der Schließglied-Einheit im Bereich seiner Verbindung mit dem Balg ein sich gehäuseseitig abstützendes Befestigungsteil aufweist, das die auftretenden Kräfte auf kürzestem Weg vom Balg bzw. dem Anschlußflansch in das Gehäuse überträgt. Ein bislang notwendiges Durchleiten dieser Kräfte als Querkräfte durch den sich in radialer Richtung nach außen erstreckenden Anschlußflansch zur Einspannstelle, in deren Bereich die konische Dichtfläche und der kritische Dichtungsspalt vorliegen, wird dadurch vermieden. Ein den Dichtungsspalt beanspruchendes Biegemoment tritt bei der vorgeschlagenen Lösung praktisch nicht auf. Das vorgeschlagene Befestigungsteil nimmt Axialkräfte auf, die beispielsweise durch Streckung des Balges in die Schließstellung des Hubventils oder durch im innenraum des Gehäuses wirksame Unterdrücke gegenüber der Umgebung des Hubventils hervorgerufen werden.

Die zweite erfindungsgemäße Maßnahme besteht darin, daß der Anschlußflansch im Bereich seiner konischen Dichtfläche auf eine den festigkeitsbedingten Erfordernissen entsprechende Mindestwandstärke in Form eines membranförmigen Dichtelements reduziert ist. Durch diese Maßnahme wird eine Materialanhäufung des kriechfähigen Balgwerkstoffes im kritischen Abdichtungsbereich vermieden.

Damit im Bereich des membranförmigen Dichtelements die notwendige Vorspannung und damit der erforderliche Dichtungskontakt mit der komplementären Ringsitzfläche im Ventilgehäuse erhalten bleibt, sieht die vorgeschlagene Erfindung weiterhin vor, daß das membranförmige Dichtelement auf seiner der konischen Dichtfläche abgewendeten Seite wenigstens einen vorgespannten elastischen Druckring aufweist, der die Dichtfläche auf die komplementäre Ringsitzfläche preßt. Der elastische Druckring wirkt praktisch wie eine Feder, die die konische Dichtfläche, auch im Faile eines Kriechens des Dichtungswerkstoffes an dieser Stelle, nachhaltig unter Vorspannung hält und somit die Aufweitung des Dichtungsspaltes mit den vorstehend beschriebenen Nachteilen zuverlässig verhindert.

Gemäß einer vorteilhaften Ausgestaltung des Balges ist vorgesehen, daß das membranförmige Dichtelement in Form eines in Richtung der komplementären Ringsitzfläche orientierten Fortsatzes an einer Verschlußplatte des Anschlußflansches ausgebildet ist, wobei die Verschlußplatte radial innenseits vom Balg ausgeht und sich im wesentlichen scheibenförmig in einer Ebene senkrecht zur Achse der Ventilstange radial nach außen erstreckt. Auf das derart materialsparend ausgebildete membranförmige Dichtelement wirkt der vorgespannte elastische Druckring. Ein "Kriechen" des Balgmaterials in diesem Bereich kann ohne Verlust an Dichtkraft durch den vorgespannten elastischen Druckring kompensiert werden.

Um das membranförmige Dichtelement und die Verschlußplatte des Anschlußflansches definiert im Gehäuse zu fixieren und zu stützen ist gemäß einer weiteren Ausführungsform ein Stutzkörper vorgesehen, der in einer oberen Gehäuseöffnung des Gehäuses koaxial zur Ventilstange Aufnahme findet und der sich axial in Richtung des Innenraumes des Gehäuses auf einer an die obere Gehäuseöffnung angrenzenden Anschlagfläche und in entgegengesetzter Richtung mittelbar oder unmittelbar ebenfalls am Gehäuse abstützt. Des weiteren nimmt der Stützkörper den Druckring in einer nutförmigen Ausnehmung, die der Mantelfläche der oberen Gehäuseöffnung benachbart ist, auf und umschließt diesen teilweise. Durch diese Maßnahme und durch den vorgenannten Anschlag des Stützkörpers im Gehäuse wird eine definierte Vorspannung des Druckringes und damit eine definierte Anpressung des membranförmigen Dichtelements an der komplementären Ringsitzfläche im Gehäuse sichergestellt.

Daruber hinaus übernimmt der Stützkörper die Abstützung der Verschlußplatte des Anschlußflansches unter Kräften, die von innen nach außen wirken. Zu diesem Zweck sind die Verschlußplatte und der Stützkörper komplementär zueinander ausgebildet. Bei einer von außen nach innen wirkenden Kraft, beispielsweise durch Unterdruck im Gehäuse gegenüber der Umgebung des Hubventils, stützt sich das Befestigungsteil über eine vorzugsweise formschlüssige Verbindung an der der Verschlußplatte abgewandten Seite des Stützkörpers ab.

Um zu verhindern, daß das membranförmige Dichtelement aus seiner Einspannlage zwischen der Ringsitzfläche im Gehäuse und dem elastischen Druckring entweicht, ist gemäß einer weiteren Ausgestaltung des Balges vorgesehen, daß sich der Fortsatz des membranförmigen Dichtelements in einen sich in Richtung der Ventilstange erstreckenden ringförmigen Kragen verlängert und dabei keilförmig erweitert, und daß der Kragen zwischen dem Stützring und der Mantelfläche der oberen Gehäuseöffnung Aufnahme findet.

Eine andere Ausgestaltung des Balges schlägt vor, den Kragen, in axialer Richtung gesehen, endseitig von einem elastischen Druckring zu beaufschlagen, der von dem Stützring in Verbindung mit der Mantelfläche der oberen Gehäuseöffnung verpreßt ist. Durch diese Maßnahme wird der Kragen zwischen dem Stützring und der Mantelfläche der oberen Gehäuseöffnung verkeilt.

Um sicherzustellen, daß ggf. doch auftretende Leckagen erkannt und davon ausgehende Reinfektionen vermieden werden, sieht eine weitere Ausgestaltung des Balges gemäß der Erfindung vor, daß in der Mantelfläche der oberen Gehäuseöffnung ein den Kragen ringförmig umschließender Leckagehohlraum ausgebildet ist, der über wenigstens einen Verbindungskanal mit der Umgebung des Hubventils verbunden ist.

Eine andere, die grundlegenden erfinderischen Merkmale des vorgeschlagenen Balges ausgestaltende Ausführungsform sieht vor, das membranförmige Dichtelement dadurch auszubilden, daß eine umlaufende Nut auf der der Dichtfläche abgewendeten Seite in den Anschlußflansch eingreift und diesen einschnürt, und daß die Nut wenigstens einen Druckring aufnimmt, der mittels einer umlaufenden Druckkante an einem von der Ventilstange durchdrungenen Gehäuseoberteil in der Nut verpreßt ist.

Um lokale Spannungen innerhalb des dauerelastischen Druckringes zu reduzieren, ist gemäß einer vorteilhaften Ausführung weiterhin vorgesehen, daß die Druckkante beiderseits jeweils von einer umlaufenden ringförmigen Ausgleichskammer flankiert wird, die den von der Nut begrenzten Raum unmittelbar erweitern.

Aus Festigkeitsgründen ist man bestrebt, den Balg so durchmesserklein wie möglich auszugestalten. Um den Balg zusätzlich zu stabilisieren, sieht eine vorteilhafte Ausgestaltung vor, daß dieser und das sich anschließende Befestigungsteil innenseits mit einer Ventilstangenbohrung versehen sind, die die Ventilstange mit einem die Funktionsfähigkeit gewährleistenden Minimalspiel umschließt. Durch diese Ausgestaltung kommt der Ventilstange eine den Balg und das Befestigungsteil von innen zusätzlich stabilisierende Wirkung zu.

Hinsichtlich der Verankerung des Befestigungsteils sieht die Erfindung sowohl beschädigungsfrei lösbare als auch nicht beschädigungsfrei lösbare Ausführungsformen vor. In diesem Zusammenhang sind alle hinlänglich bekannten kraft- und/oder formschlüssigen Verankerungsformen realisierbar.

Eine besonders vorteilhafte Ausgestaltung, die zum einen lösbar und zum andern kraft- und formschlüssig das Befestigungsteil im Gehäuseoberteil verankert, ist gegeben, wenn das Befestigungsteil mit einem Gewinde, vorzugsweise mit einem Trapezgewinde, in das Gehäuseoberteil eingeschraubt ist.

Eine andere Möglichkeit der Verankerung des Befestigungsteils im Gehäuseoberteil besteht darin, eine Klemmung, d.h. eine kraftschlüssige Verbindung vorzusehen.

Falls eine Beschädigung oder Zerstörung der Schließglied-Einheit bei deren Austausch aus dem aseptischen Hubventil als hinnehmbar oder gar wünschenswert erachtet wird, wird gemäß einer weiteren Ausgestaltung vorgesehen, das Befestigungsteil durch haken- oder widerhakenförmigen Formschluß im Gehäuseoberteil zu verankern. Eine derartige Lösung ist in der Regel sehr kostengünstig. Der Einbau der Schließglied-Einheit in das Ventil ist dabei sehr einfach und problemlos möglich, ein Ausbau jedoch in der Regel nur durch Beschädigung oder Zerstörung der Schließglied-Einheit insbesondere im Bereich des Befestigungsteils durchführbar. In diesem Zusammenhang wird vorgeschlagen, das Befestigungsteil auf der dem Balg abgewandten Seite der Verschlußplatte in Form von mehreren, vorzugsweise gleichmäßig über den Umfang der Verschlußplatte verteilten Zughaken auszubilden, die die Ventilstange konzentrisch umschließen und die sich mit ihren als Haken ausgebildeten freien Enden auf einer Stützfläche, die von einer ringförmigen Ausnehmung im Gehäuseoberteil gebildet wird, abstützen.

Die vorgeschlagene Armierung stützt den stangennahen Bereich der Balgfalte dauerhaft und verhindert dadurch, daß sich dieser Bereich durch Fließen an die Stange anlegt. Dabei bleibt der relativ enge Spalt zwischen der armierten Balgfalte und der Stange erhalten, wodurch die stützende Funktion der Stange nach wie vor gegeben ist und die Stabilität des Balges insgesamt günstig beeinflußt wird.

Die dauerhafte Stützung des Balges und insbesondere seiner Balgfalten wird gemäß einer vorteilhaften Ausgestaltung dadurch erreicht, daß die Armierung aus einem Material besteht, das temperaturbeständig ist, eine geringe plastische Duktilität und einen geringen Reibungskoeffizienten gegenüber dem Material der Stange besitzt. Durch diese zu fordernden Eigenschaften, die einerseits positive Eigenschaften des in der Regel zur Anwendung kommenden Materials für den Balg (Polytetrafluorethylen) beinhalten (Temperaturbeständigkeit und geringer Reibungskoeffizient gegenüber dem Material der Stange) und andererseits den entscheidenden Nachteil des Balgmaterials, nämlich die relativ große plastische Duktilität, nicht aufweisen, sind die in Frage kommenden Materialien für die Armierung eingegrenzt. Es kommen hier vor allem metallische und keramische Werkstoffe und temperaturbeständige Kunststoffe zur Anwendung.

Um die Armierung im Zuge des Herstellungsprozesses des Balges relativ einfach mit dem Balgmaterial zu verbinden, wird vorgeschlagen, daß die Armierung die Balgfalte von innen berandet.

Als Möglichkeiten einer Verbindung zwischen dem Material des Balges und dem Material der Armierung wird entweder eine stoffschlüssige oder ein form- und/oder kraftschlüssige Verbindung vorgeschlagen.

Ausführungsbeispiele der Erfindung werden in der Zeichnung dargestellt und sind nachfolgend kurz beschrieben. Es zeigen
- **Figur 1**: einen unterhalb des Stellantriebes verlaufenden Mittelschnitt durch ein Hubventil mit einem Balg der gattungsgemäßen Art in Verbindung mit einem Anschlußflansch in einer ersten Ausführungsform;
- **Figur 2**: einen Mittelschnitt durch eine Schließglied-Einheit oberhalb des Ventilsitzes mit einem Balg der gattungsgemäßen Art in Verbindung mit einem Anschlußflansch in einer zweiten Ausführungsform;
- **Figur 3**: in vergrößerter Darstellung einen Mittelschnitt durch den Anschlußflansch in der ersten Ausführungsform in einem in **Figur 1** mit Einzelheit "X" gekennzeichneten Bereich;
- **Figur 4**: ebenfalls in vergrößerter Darstellung einen Mittelschnitt durch den Anschlußflansch in der ersten Ausführungsform gemäß **Figur 3**, wobei sich der Fortsatz des membranförmigen Dichtelements in einen sich in Richtung der Ventilstange erstreckenden ringförmigen Kragen verlängert und dabei keilförmig erweitert;
- **Figur 5**: ebenfalls im Mittelschnitt die Schließglied-Einheit gemäß **Figur 2** für sich allein und in vergrößerter Darstellung;
- **Figur 6**: in stark vergrößerter Darstellung einen Mittelschnitt durch die umlaufende Nut, die umlaufende Druckkante am Gehäuseoberteil und den zwischen beiden verpreßten elastischen Druckring in einem in **Figur 2** mit Einzelheit "Z" gekennzeichneten Bereich;
- **Figur 7**: einen Mittelschnitt durch das Befestigungsteil des Anschlußflansches an der in **Figur 2** mit Einzelheit "Y" gekennzeichneten Stelle, wobei in diesem Bereich die Merkmale einer sich von der Ausgestaltung gemäß **Figur 2** unterscheidenden Lösung dargestellt sind und
- **Figur 8**: einen Mittelschnitt durch die Schließglied-Einheit in einer der beiden grundlegenden Ausführungsformen mit einer im stangennahen Bereich des Balges vorgesehenen Armierung.

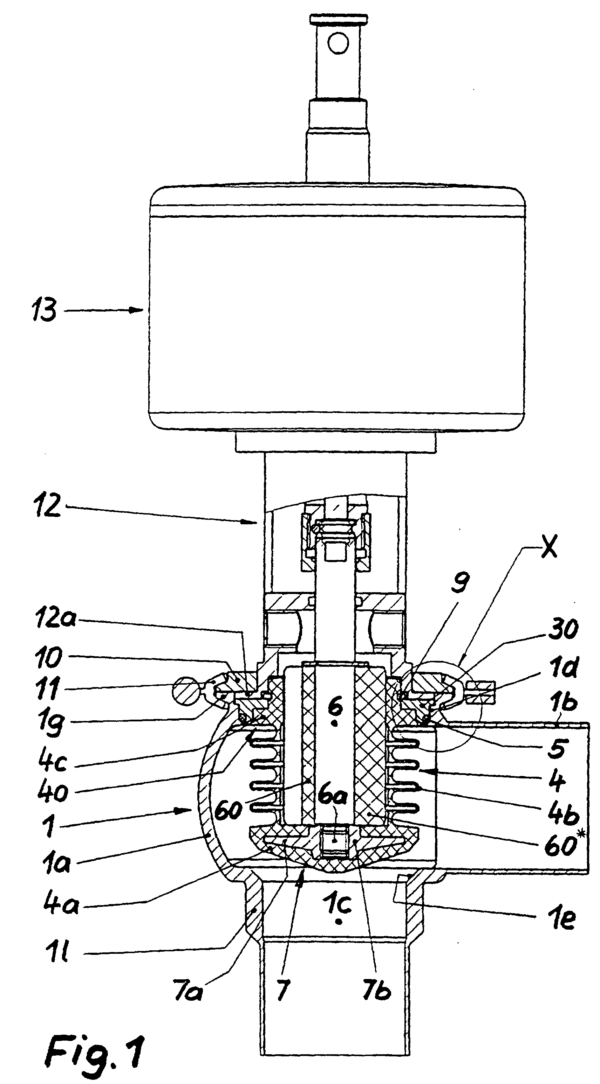

Ein Hubventil 1 (**Figur 1**) weist ein Gehäuse 1a auf, das, bezogen auf die Darstellungslage, mit einem seitlichen Gehäuseanschluß 1b und einem nach unten weisenden Gehäuseanschluß 1l versehen. Letzterer verbindet über eine untere Gehäuseöffnung 1c den innenraum des Gehäuses 1a mit einem ggf. an das Gehäuse 1a unterhalb angeflanschten weiteren, nicht dargestellten Gehäuseteil. Im Bereich des Überganges des Gehäuses 1a zur unteren Gehäuseöffnung 1c ist eine dem innenraum zugewandte, vorzugsweise konische Sitzfläche 1e ausgebildet, die mit einem entsprechenden Verschfußteil 4a zusammenwirkt. Letzteres ist mit einer Ventilstange 6 starr verbunden, die nach oben durch das Gehäuse 1a und eine sich diesem anschließende Laterne 12 hindurchgeführt ist und in einem mit letzterer verbundenen Steilantrieb 13 endet. Die Ventilstange 6 ist von einem Balg 4b, einem sogenannten Faltenbalg oder auch einem sogenannten Wellrohr oder einer Membran, wie sie aus der EP 0 508 658 B1 bekannt ist, konzentrisch umschlossen, wobei diese vorzugsweise in axialer Richtung dehnbaren Abdichtungselemente jeweils stoffschlüssig einerseits am Verschlußteil 4a und andererseits an einem Anschlußflansch 40 befestigt sind. Letzterer besteht unter anderem aus einer Verschlußplatte 4c, die eine im wesentlichen scheibenförmige, in einer Ebene senkrecht zur Achse der Ventilstange 6 orientierte, radial innenseits vom Balg 4b ausgehende Ausprägung besitzt, und sie erstreckt sich so weit radial nach außen, daß sie in Verbindung mit einer korrespondierenden oberen Gehäuseöffnung 1d im Gehäuse 1a den Ausbau einer Schließglied-Einheit 4, die neben dem Anschlußflansch 40 aus dem Verschlußteil 4a und dem Balg 4b besteht, nach oben erlaubt.

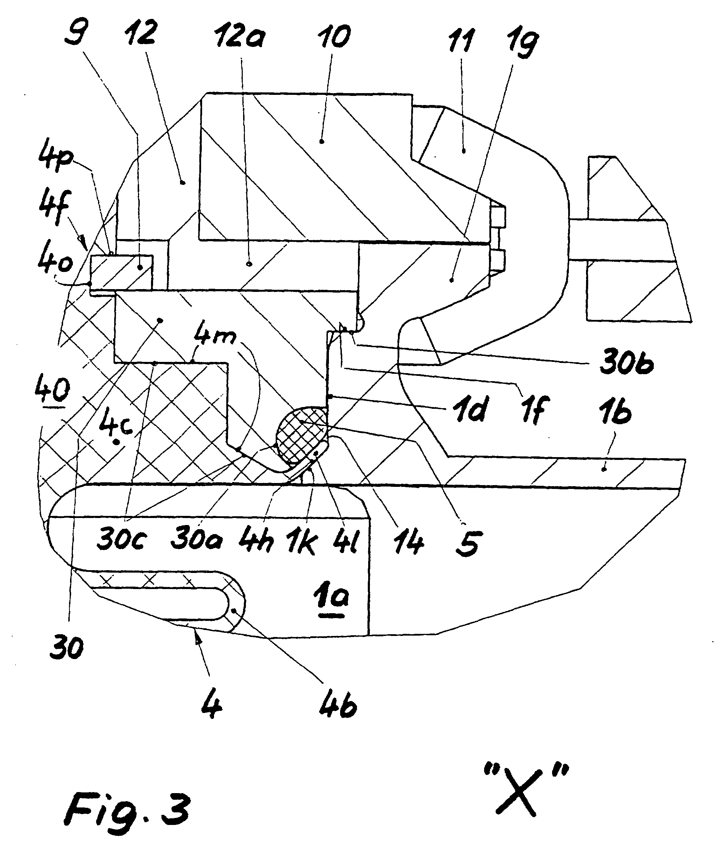

Die scheibenförmige Verschlußplatte 4c ist radial außenseits auf eine den festigkeitsbedingten Erfordernissen entsprechende Mindestwandstärke in Form eines membranförmigen Dichtelements 4l reduziert (vgl. hierzu vergrößerte Darstellung nach **Figur 3** des in **Figur 1** mit Einzelheit "X" gekennzeichneten Bereichs). Das membranförmige Dichtelement 4l ist in Form eines in Richtung einer komplementären Ringsitzfläche 1k (vgl. insbesondere **Figur 3**) im Gehäuse 1a orientierten Fortsatzes an der Verschlußplatte 4c ausgebildet und es weist eine mit der Ringsitzfläche 1k zusammenwirkende konische Dichtfläche 4h auf. Letztere wird über einen vorgespannten elastischen Druckring 5 auf die komplementäre Ringsitzfläche 1k gepreßt, der auf der der konischen Dichtfläche 4h des membranförmigen Dichtelements 4l abgewendeten Seite angeordnet ist. Der elastische Druckring 5 wird von einer nutförmigen Ausnehmung 30a in einem Stützkörper 30 aufgenommen und im Zusammenwirken mit der Mantelfläche der oberen Gehäuseöffnung 1d bis auf jenen Teil umschlossen, welcher mit dem membranförmigen Dichtelement 4l in Kontakt steht. Der Stützkörper 30 findet in der oberen Gehäuseöffnung 1d des Gehäuse 1a koaxial zur Ventilstange 6 Aufnahme, und er stützt sich axial in Richtung des Innenraumes des Gehäuses 1a über eine erste Stützfläche 30b auf einer an die obere Gehäuseöffnung 1 d angrenzende Anschlagfläche 1f ab.

Im gespannten Zustand des Systems erfährt der elastische Druckring 5 somit eine definierte Vorspannung mit metallischem Anschlag des Spannelementes, dem Stützkörper 30. Die Einbettung des Stützkörpers 30 und seine Anlage an der Anschlagfläche 1f erfolgt über einen Laternenflansch 12a der Laterne 12, der innerhalb eines Gehäuseflansches 1g aufgenommen und koaxial zentriert wird. Die form- und kraftschlüssige Einbettung des Laternenflansches 12 im Gehauseflansch 1g besorgt ein Klemmffansch 10, der mittels eines Verbindungselementes 11, beispielsweise eines sog. Klappringes, mit dem Gehäuseflansch 1g verspannt ist. Der Stützring 30 verfügt, ausgehend von der Ausnehmung 30a und bezogen auf seinen weiteren radialen Erstreckungsbereich, über eine zweite Stützfläche 30c, die die komplementäre Verschlußplatte 4c mit deren erster Stützfläche 4m, in axialer Richtung gesehen, von außen stützt. Dadurch können Kräfte, die vom Innenraum des Gehäuses 1a nach außen wirken, vom Stützkörper 30 aufgenommen und über den Laternenflansch 12a, den Klemmflansch 10 und das Verbindungselement 11 in den Gehäuseflansch 1g und somit in das Gehäuse 1a abgeleitet werden. Bei einer Beanspruchung der Verschlußplatte 4c in umgekehrter Richtung, d.h. von außen nach innen, beispielsweise durch Streckung des Balges 4b in die Schließlage des Hubventils 1 oder in Folge Unterdruckbildung im Innenraum des Gehäuses 1a, werden die daraus resultierenden Kräfte vom Befestigungsteil 4f über ein in letzteres formschlüssig eingreifendes Sicherungselement 9 auf den Stützkörper 30 übertragen, der sich bei dieser Beanspruchungsrichtung unmittelbar über seine erste Stützfläche 30 b auf die Anschlagfläche 1f am Gehäuse 1a abstützt. Zu diesem Zweck ist in dem Befestigungsteil 4f eine Sicherungsnut 4o vorgesehen, die mit einer zweiten Stützfläche 4p auf dem Sicherungsring 9 aufliegt.

Im Verschlußteil 4a (**Figur 1**) ist ein Befestigungseinsatz 7 eingebettet, der aus einer scheibenförmigen, sich radial weit nach außen erstreckenden Befestigungsplatte 7a und einer zentrischen Befestigungsmuffe 7b besteht. Die Ventilstange 6 ist mit einem Gewindezapfen 6a in die Befestigungsmuffe 7b eingeschraubt.

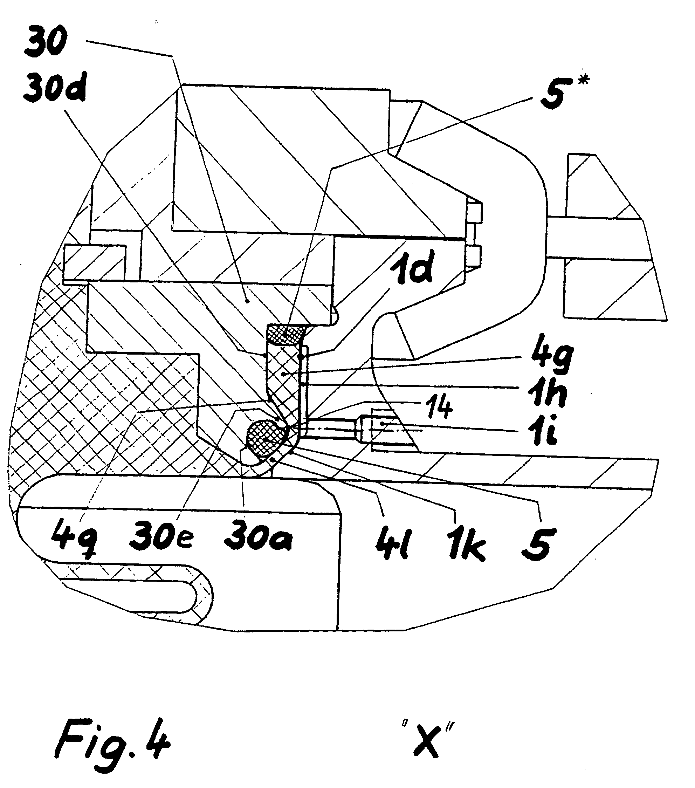

Um sicher zu gehen, daß auch bei extremsten Beanspruchungen ein Herausreißen des membranförmigen Dichtelements 4l aus seiner Einspannsteilung zwischen der Ringsitzfläche 1k und dem Druckring 5 vermieden wird, sieht eine Weiterbildung der vorstehend beschriebenen Anordnung gemäß **Figur 3** vor, daß sich der Fortsatz des membranförmigen Dichtelements 4l in einen sich in Richtung der Ventilstange 6 erstreckenden ringförmigen Kragen 4g verlängert (**Figur 4**) und dabei keilförmig erweitert, und daß der Kragen 4g zwischen dem Stützring 30 und der Mantelfläche der oberen Gehäuseöffnung 1d Aufnahme findet. Der Kragen 4g weist somit in seinem unteren Bereich keilförmige Form auf, so daß bei einer zum Innenraum hin gerichteten Zugbeanspruchung des membranförmigen Dichtelements 4l der mit diesem verbundene Kragen 4g zwischen einer ringförmig Ausnehmung 30d im Stützkörper 30, die in einer Keilfläche 4q endet, und der gegenüberliegenden Mantelfläche der oberen Gehäuseöffnung 1d verkeilt wird. Die Keilfläche 4q ist an einem Vorsprung 30e ausgebildet, der einen Teil der nutförmigen Ausnehmung 30a für den elastischen Druckring 5 berandet.

Damit der Kragen 4g bereits im von Betriebskräften freien Zustand in seiner ihn einbettenden Umgebung vorgespannt und verkeilt ist, ist weiterhin vorgesehen, ihn, in axialer Richtung gesehen, endseitig von einem elastischen Druckring 5* zu beaufschlagen, der von dem Stützring 30 in Verbindung mit der Mantelfläche der oberen Gehäuseöffnung 1d verpreßt ist (**Figur 4**).

Um den Bereich zwischen dem membranförmigen Dichtelement 4l und dem elastischen Druckring 5*, die jeweils im dichtenden Kontakt mit der Ringsitzfläche 1k bzw. der Mantelfläche der oberen Gehäuseöffnung 1d stehen, zu überwachen und ggf. von Leckagen zu befreien, ist gemäß einem weiteren Vorschlag vorgesehen, in der Mantelfläche der oberen Gehäuseöffnung 1d einen den Kragen 4g vorzugsweise ringförmig umschließenden Leckagehohlraum 1h auszubilden, der über wenigstens einen Verbindungskanal 1i mit der Umgebung des Hubventils 1 verbunden ist.

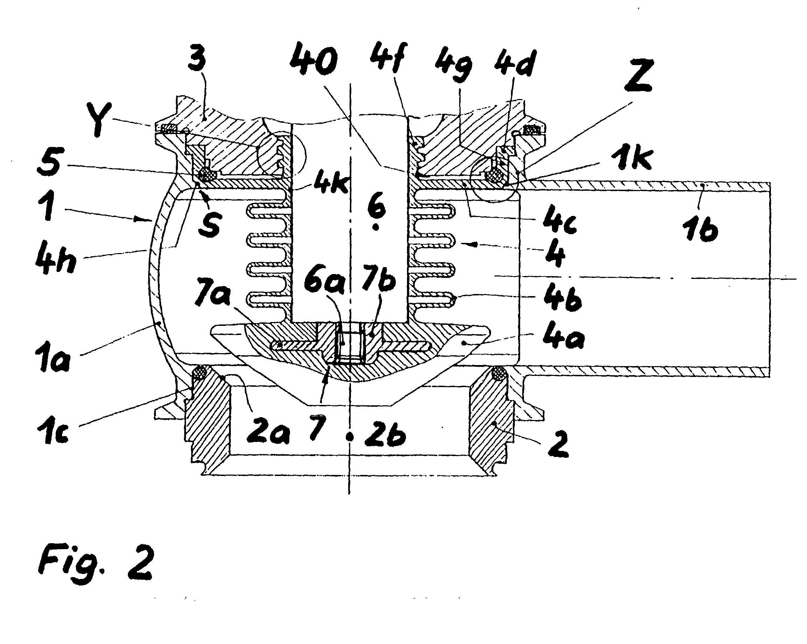

**Figur 2** zeigt ein nur teilweise dargestelltes Hubventil 1 mit einer Ausgestaltung des Anschlußflansches 40 in einer zweiten grundsätzlichen Ausführungsform. Im Gegensatz zum Hubventil 1 gemäß **Figur 1** ist in einer unteren Gehäuseöffnung 1c ein Sitzring 2 abdichtend eingesetzt, der über eine Verbindungsöffnung 2b den Innenraum des Gehäuses 1a mit einem ggf. an das Gehäuse 1a unterhalb angeflanschten Gehäuseteil verbindet. Der Sitzring 2 verfügt über eine dem Innenraum des Gehäuses 1a zugewandte, vorzugsweise konische Sitzfläche 2a, die mit dem Verschlußteil 4a zusammenwirkt. Der übrige Aufbau des Hubventils 1 ist, bis auf die nachstehend beschriebene Ausprägung des Anschlußflansches 40 und seine Einbettung in das Gehäuse 1a im wesentlichen identisch mit jenem gemäß **Figur 1.**

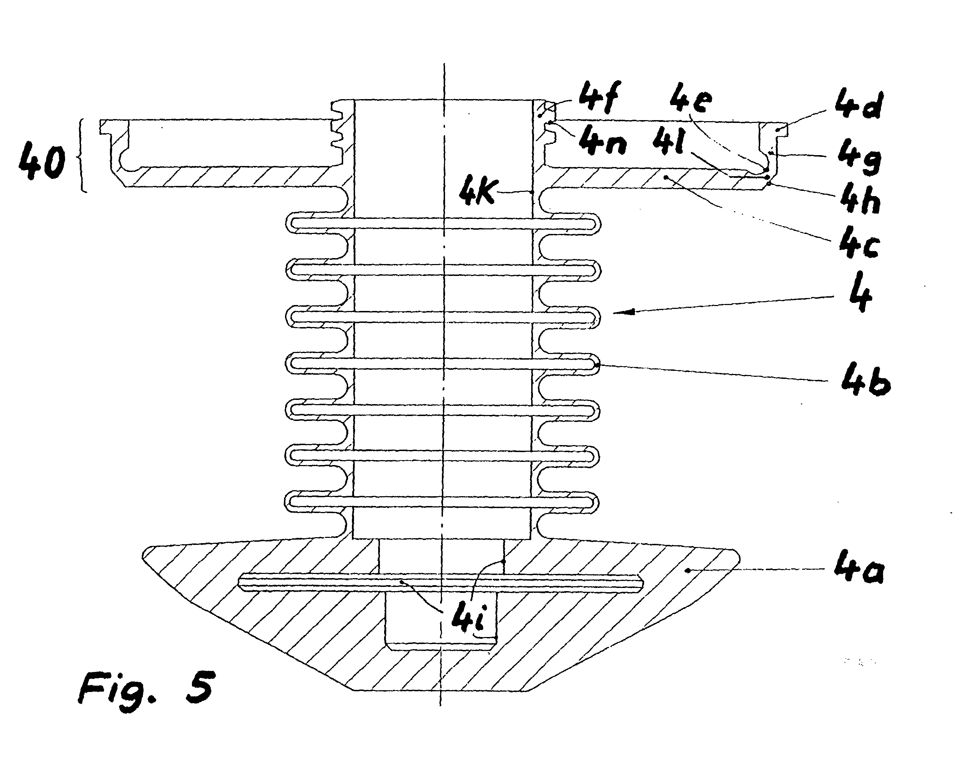

Der erste Erfindungsgedanke der vorliegenden Erfindung bezieht sich auf den (**Figur 2**) mit Einzelheit "Z" bezeichneten Bereich, der in **Figur 6** noch näher verdeutlicht ist. Da bei dem in der Regel zur Verwendung kommenden Werkstoff (PTFE) eine allmähliche Gestaltänderung des einen Spalt S mit dem Gehäuse 1a bildenden Anschlußflansches 40 im Bereich seiner konischen Dichtfläche 4h unter wechselnden Betriebsbedingungen (Druck, Temperatur) bei Ausführungen nach dem Stand der Technik bislang unvermeidbar ist, wird das am Anschlußflansch 40 am außenseitigen radialen Ende der Verschlußplatte 4c angeformte membranförmige Dichtelement 41 (**Figur 5**) dadurch ausgebildet, daß eine umlaufende Nut 4e auf der der Dichtfläche 4h abgewendeten Seite in den Anschlußflansch 40 eingreift und diesen einschnürt. Die Nut 4e nimmt wenigstens einen Druckring 5 auf. der mittels einer umlaufenden Druckkante 3c (**Figur 6**) an einem von der Ventilstange 6 durchdrungenen Gehäuseteil 3 in der Nut 4e verpreßt ist.

Der im Bereich der konischen Dichtfläche 4h über die Nut 4e auf eine den festigkeitsbedingten Erfordernissen entsprechende Mindestwandstärke eingeschnürte Anschlußflansch 40 (**Figur 5**) besteht aus einem sich in Richtung der Achse der Ventilstange 6 erstreckenden Kragen 4g, der die im wesentlichen scheibenförmige, in einer Ebene senkrecht zur Achse der Ventilstange 6 orientierte, radial innenseits vom Balg 4b ausgehende Verschlußplatte 4c mit einem am Ende des Anschlußflansches 40 angeordneten ringförmigen Flanschvorsprung 4d verbindet. Der Eingriff der Nut 4e ist zweckmäßigerweise so tiefgreifend, daß der verbleibende Bereich so dünn, wie dies gerade noch aus Festigkeitsgründen möglich ist, ausgeprägt ist.

In Folge der durch die Druckkante 3c hervorgerufenen Verpressung wird der dauerelastische Druckring 5, wie es eine vorteilhafte Ausgestaltung vorsieht, beiderseits der Druckkante 3c in eine erste und eine zweite ringförmige Ausgieichskammer 3a bzw. 3b ausgewulstet (**Figur 6**). Letztere dienen der Reduzierung lokaler Spannungen innerhalb des dauerelastischen Druckringes 5 in diesem Bereich. Ein diesbezügliches Ausweichen des Druckringes 5 in Folge von Volumenänderung und Verformung wird bei der Ausführungsform gemäß den **Figuren 3** und **4** durch den dort mit 14 bezeichneten Ausgleichsraum sichergestellt.

Der dauerelastische Druckring 5 (**Figur 2,5,6**) kompensiert durch sein reversibles Formänderungsvermögen die vergleichsweise relativ geringen Formänderungen des ringförmigen Flanschvorsprunges 4d und des angrenzenden Kragens 4g und teilweise auch der Verschlußplatte 4c in diesem Bereich, und er wirkt quasi wie eine selbsttätig wirkende Nachsteilvorrichtung zur dauerhaften Sicherstellung einer aseptischen Bedingungen gerecht werdenden Abdichtung zwischen konischer Dichtfläche 4h und der benachbarten komplementären Ringsitzfläche 1 k des Gehauses 1a. In Bezug auf die Sichersteilung einer dauerhaften Vorspannung des membranförmigen Dichtelements 4l auf der zugeordneten Ringsitzfläche 1k entsprechen die Wirkmechanismen jenen der ersten Ausführungsform gemäß den **Figuren 1, 3** und **4**.

Falls es sich als zweckmäßig oder notwendig erweist, werden mehrere der vorgenannten dauerelastischen Druckringe 5 zur dauerhaften Sicherstellung der Vorspannung im Bereich der umlaufenden Nut 4e, verteilt über den kritischen Bereich, angeordnet.

Der zweite vorstehend angesprochene Erfindungsgedanke wird aus dem in **Figur 2** mit Einzelheit "Y" bezeichneten Bereich ersichtlich. Diese Einzelheit "Y" ist auch in **Figur 5** in vergrößerter Darstellung gezeigt. Zur Vermeidung eines Biegemomentes, resultierend aus einem Kräftepaar, das beispieisweise durch eine Zugkraft im Balg 4b und durch die entsprechende Reaktionskraft im Bereich der Verschlußplatte 4c gebildet wird, ist der gesamte Anschlußflansch 40 der Schließglied-Einheit 4 im Bereich seiner Verbindung mit dem Balg 4b mit einem in dem Gehäuseoberteil 3 verankerten Befestigungsteil 4f versehen, in der dargestellten Ausführungsform ist das Befestigungsteil 4f außenseits mit einem Gewinde 4n, vorzugsweise mit einem Trapezgewinde, versehen, über das eine kraftund formschlüssige Verbindung mit dem Gehäuseoberteil 3 möglich ist. Dadurch können die vom Faltenbalg 4b auf die Verschlußplatte 4c ausgeübten Zugkräfte unmittelbar, ohne die Bildung eines den kritischen Dichtungsspalt S beeinflussenden Biegemomentes, in das Gehäuseoberteil 3 eingeleitet und dort aufgenommen werden.

Der Balg 4b und das sich anschließende Befestigungsteil 4f sind innenseits mit einer Ventilstangenbohrung 4k versehen, die die Ventilstange 6 mit einem die Funktionsfähigkeit gewährleistenden Minimalspiel umschließt. Durch diese Ausgestaltung werden der Balg 4b und das Befestigungsteil 4f von innen zusätzlich stabilisiert. Eine entsprechende Ausgestaltung im Rahmen der ersten Ausführungsform der vorgeschlagenen Erfindung zeigt **Figur 1**. Hier wird der Balg 4b (s. Darstellung rechts von der Ventilstange 6) von einem Stützteil 60* gestützt, während die Darstellung links von der Ventilstange 6 ein Stützteil 60 zeigt, welches mit relativ großem Spiel von dem Balg 4b umschlossen ist.

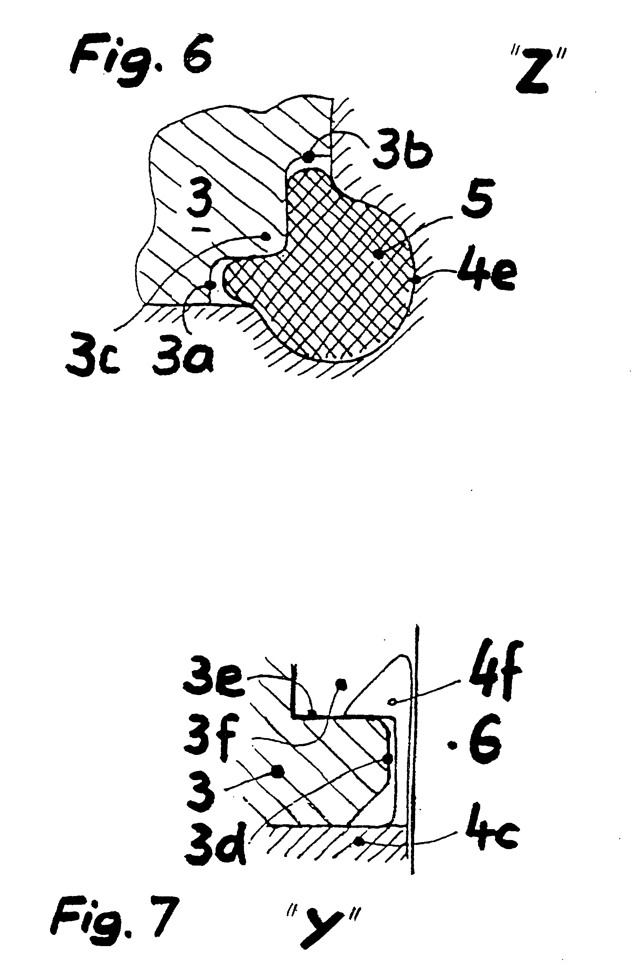

Eine andere Ausgestaltung in diesem Bereich sieht vor (**Figur 7**), das Befestigungsteil 4f in Form mehrerer Zughaken auszugestalten, die vorzugsweise gleichmäßig über den Umfang der Verschlußplatte 4c verteilt sind und die Ventilstange 6 konzentrisch umschließen. Die Zughaken 4f sind an ihrem freien Ende hakenförmig ausgebildet, wobei sie sich auf einer Stützfläche 3e, die von einer Ausnehmung 3f im Gehäuseoberteil 3 gebildet wird, abstützen. Gemäß einer vorteilhaften Ausgestaltung werden mehrere dieser Zughaken 4f durch eine zylinderförmige Verlängerung gebildet, die sich auf der dem Balg 4b abgewandten Seite der Verschlußplatte 4c erstreckt. Damit eine Montage der Verschlußplatte 4c in Verbindung mit den Zughaken 4f in einer inneren Bohrung 3d im Gehäuseoberteil 3 möglich ist, ist das die Zughaken 4f bildende zylinderförmige Fortsetzungsteil mehrfach, vorzugsweise in gleichmäßigen Abständen, geschlitzt. Nachdem die Zughaken 4f in die Aufnehmung 3f eingeführt sind, werden sie dort durch die Ventilstange 6 in ihrer Verankerungsstellung gehalten. Zugkräfte, hervorgerufen durch einen sich in der Schließstellung des Hubventils 1 streckenden Balg 4b, werden nunmehr über die Zughaken 4f und die Stützfläche 3e auf das Gehäuseoberteil 3 unmittelbar übertragen und dort abgestützt, so daß es zu keiner Biegebeanspruchung der Verschlußplatte 4c mit den damit verbundenen Folgen für den Dichtungsspalt S kommt.

Die vorstehend beschriebenen Wirkungen und Vorteile der Zughaken 4f werden gleichermaßen auch bei einer Ausgestaltung der Schließglied-Einheit gemäß den **Figuren 2** und **5** erreicht (form- und kraftschlüssige Verbindung mittels Gewinde). Es sind darüber hinaus auch andere Kraftübertragungsmöglichkeiten möglich, wobei in jedem anderen Fall sichergestellt werden muß, daß die vom Balg 4b bei dessen Verlängerung ausgeübten Zugkräfte oder die aus dem jeweiligen Druck im Gehäuse resultierenden Kräfte (beispielsweise Kräfte aus Unterdruck gegenüber dem Umgebungsdruck des Hubventils) auf unmittelbarem Weg in das Gehäuseoberteil 3 eingeleitet werden. Dies kann anstelle der vorstehend beschriebenen Verschraubung 4f oder Zughaken auch über Widerhaken, über andere formschlüssige Verbindungsformen, wie beispielsweise über den Sicherungsring 9 in der komplementären Sicherungsnut 4o (vgl. **Figuren 1, 3** und **4**) oder eine geeignete kraftschlüssige Klemmung der Verschlußplatte 4c in diesem Bereich geschehen.

Wird die Befestigungsmöglichkeit der Verschlußplatte 4c im vorgenannten Bereich als formschlüssige Verbindung ausgeführt, so gibt es hier wiederum zwei alternative Möglichkeiten. Zum einen kann der Formschluß beschädigungsfrei lösbar und zum andern nicht beschädigungsfrei lösbar ausgeführt werden. In jenen Fällen, wo beim Austausch der Schließglied-Einheit 4 deren Zerstörung planmäßig in Kauf genommen werden kann oder wird, kann die Befestigung beispielsweise als nicht lösbare Schnappverbindung ausgeführt werden, die bei der Demontage der Schließglied-Einheit 4 ebenfalls zerstört wird. In allen anderen Fällen wird man diese Schnappverbindung lösbar ausführen. Ein Blick auf die Ausgestaltung des Hubventils gemäß **Figur 1** zeigt, daß die Schließglied-Einheit 4, falls im in Frage kommenden Bereich Zughaken 4f vorgesehen sind, dann zerstörungsfrei demontiert werden kann, wenn zunächst die Ventilstange 6 aus der Ventilstangenbohrung 4k der Schließglied-Einheit 4 und danach der sich anschließende Zughaken 4f entfernt werden. Alsdann lassen sich die Zughaken 4f radial nach innen biegen und aus der Bohrung 3d im Gehäuseoberteil 3 entfernen. Bei Ausgestaltung des Befestigungsteils 4f in Form einer lösbaren Verschraubung ist eine Demontage problemlos möglich.

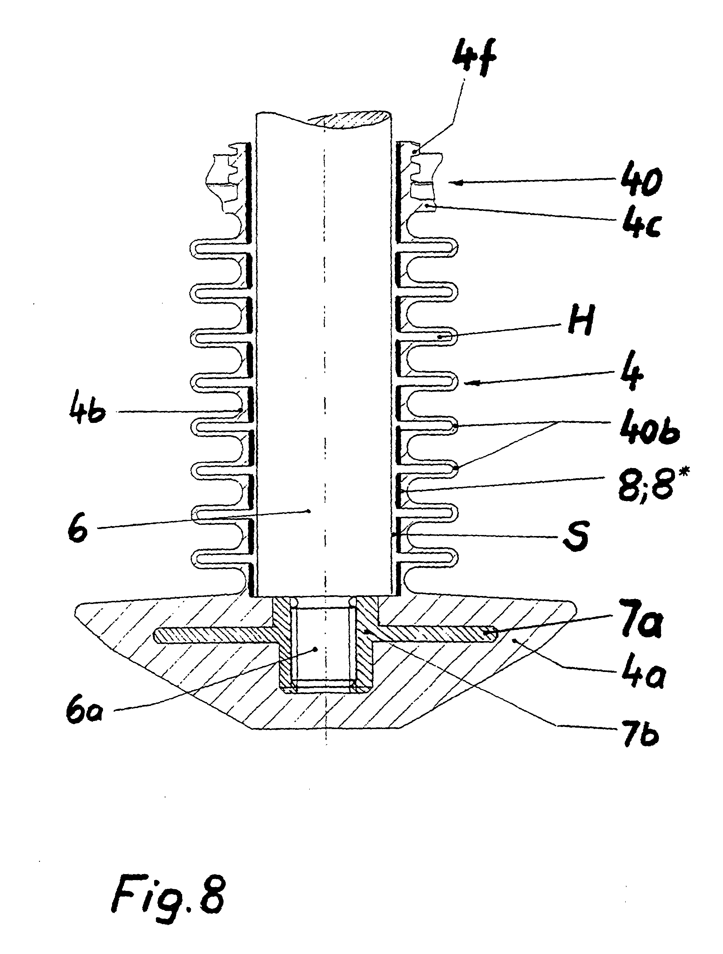

**Figur 8** zeigt die vorstehend bereits beschriebene Schließglied-Einheit 4, die in ihrem mittleren Teil aus dem Balg 4b besteht, der jeweils endseitig einerseits mit einem gehäuseseitigen Anschlußflansch 40 und andererseits mit dem Verschlußteil 4a verbunden ist. Der Balg 4b selbst besteht aus einer Vielzahl von konvex und konkav ausgebildeten und in dieser Ausgestaltung wechselseitig aneinandergereihten Balgfalten 40b, wobei die, bezogen auf den Balginnenraum, konvex ausgewölbte jeweilige Balgfalte 40b einen Hohlraum H bildet. Die Schließglied-Einheit 4 wird von der Ventilstange 6 koaxial durchdrungen, die in einen Gewindezapfen 6a ausmündet und mit diesem in der Befestigungsmuffe 7b eingeschraubt ist, wobei letztere, ebenso wie die Befestigungsplatte 7a, in einer Ausnehmung 4i im Verschlußteil 4a eingebettet ist (siehe auch Figur 5).

Gemäß der Erfindung wird vorgeschlagen, im stangennahen Bereich einer Balgfalte 40b eine diesen Bereich ringförmig dauerhaft stützende Armierung 8 bzw. 8* vorzusehen. Im Ausführungsbeispiel berandet die Armierung 8 bzw. 8* die Balgfalte 40b von innen. Dabei kann im Ausführungsbeispiel die Verbindung entweder stoffschlüssig oder kraftschlüssig realisiert sein.

Sofern die jeweiligen ringförmigen Armierungen 8 in dieser Gestalt mit der jeweiligen Balgfalte 40b verbunden bzw. in das Material der Balgfalte hineingebracht oder an dieses herangebracht werden, sind die in Frage kommenden Armierungen mit dem Bezugszeichen 8 versehen.

## Patentansprüche

1. Hubventil, das mit einem mit einer ventilgehäuseseitigen Sitzfläche (1e;2a) zusammenwirkenden Verschlußteil (4a) ausgestattet ist, wobei letzteres über eine aus einem Gehäuse (1a) herausgeführte Ventilstange (6) mit einem Stellantrieb (13) verbunden ist, mit einem Balg (4b) zur Abdichtung der Ventilstangendurchführung, insbesondere ausgebildet als Faltenbalg oder Wellrohr (4b), der die Ventilstange (6) koaxial umschließt, der einerseits mit dem Verschlußteil (4a) verbunden ist und der andererseits an seinem freien Ende einen Anschlußflansch (40) mit einer konischen Dichtfläche (4h) aufweist, die gegen eine komplementäre Ringsitzfläche (1k) des Gehäuses (1a) anliegt, und wobei das Verschlußteil (4a), der Balg (4b) und sein Anschlußflansch (40) eine einstückige, auswechselbare Schließglied-Einheit (4) bilden,
**dadurch gekennzeichnet, daß** der Anschlußflansch (40) der Schließglied-Einheit (4)
• im Bereich seiner Verbindung mit dem Balg (4b) ein sich gehäuseseitig abstützendes Befestigungsteil (4f) zur weitestgehend biegemomentfreien Aufnahme der aus der ventilhubbedingten Verformung des Balges (4b) und/oder dem jeweiligen Druck im Gehäuse (1a) resultierenden Kräfte aufweist und
• im Bereich seiner konischen Dichtfläche (4h) auf eine den festigkeitsbedingten Erfordernissen entsprechende Mindestwandstärke in Form eines membranförmigen Dichtelements (41) reduziert ist,
• und daß das membranförmige Dichtelement (4l) auf seiner der konischen Dichtfläche (4h) abgewendeten Seite wenigstens einen vorgespannten elastischen Druckring (5) aufweist, der die Dichtfläche (4h) auf die komplementäre Ringsitzfläche (1k) preßt.

2. Hubventil nach Anspruch 1, **dadurch gekennzeichnet, daß** das membranförmige Dichtelement (4l) in Form eines in Richtung der komplementären Ringsitzfläche (1k) orientierten Fortsatzes an einer Verschlußplatte (4c) des Anschlußflansches (40) ausgebildet ist, wobei die Verschlußplatte (4c) radial innenseits vom Balg (4b) ausgeht und sich im wesentlichen scheibenförmig in einer Ebene senkrecht zur Achse der Ventilstange (6) radial nach außen erstreckt.

3. Hubventil nach Anspruch 2, **dadurch gekennzeichnet, daß** ein Stützkörper (30) vorgesehen ist,
• der in einer oberen Gehäuseöffnung (1d) des Gehäuses (1a) koaxial zur Ventilstange (6) Aufnahme findet und der sich axial in Richtung des Innenraumes des Gehäuses (1a) auf einer an die Gehäuseöffnung (1d) angrenzenden Anschlagfläche (1f) und in entgegengesetzter Richtung mittelbar oder unmittelbar ebenfalls am Gehäuse (1a) abstützt,
• der den Druckring (5) in einer nutförmigen Ausnehmung (30a), die der Mantelfläche der Gehäuseöffnung (1d) benachbart ist, aufnimmt und teilweise umschließt,
• der, ausgehend von der Ausnehmung (30a), in seinem weiteren radialen Erstreckungsbereich die Verschlußplatte (4c), in axialer Richtung gesehen, von außen stützt und
• der radial innenseits, vorzugsweise über eine formschlüssige Verbindung, das erste Befestigungsteil (4f), in axialer Richtung gesehen, von innen stützt.

4. Hubventil nach Anspruch 2 oder 3, **dadurch gekennzeichnet, daß** sich das membranförmige Dichtelement (4l) in einen sich in Richtung der Ventilstange (6) erstreckenden ringförmigen Kragen (4g) verlängert und dabei keilförmig erweitert, und daß der Kragen (4g) zwischen dem Stützring (30) und der Mantelfläche der Gehäuseöffnung (1d) Aufnahme findet.

5. Hubventil nach Anspruch 4, **dadurch gekennzeichnet, daß** der Kragen (4g), in axialer Richtung gesehen, endseitig von einem elastischen zweiten Druckring (5*) beaufschlagt ist, der von dem Stützring (30) in Verbindung mit der Mantelfläche der oberen Gehäuseöffnung (1d) verpreßt ist.

6. Hubventil nach Anspruch 4 oder 5, **dadurch gekennzeichnet, daß** in der Mantelfläche der oberen Gehäuseöffnung (1d) ein den Kragen (4g) ringförmig umschließender Leckagehohlraum (1h) ausgebildet ist, der über wenigstens einen Verbindungskanal (1i) mit der Umgebung des Hubventils (1) verbunden ist.

7. Hubventil nach Anspruch 1, **dadurch gekennzeichnet,**
• **daß** das membranförmige Dichtelement (4l) dadurch ausgebildet ist, daß eine umlaufende Nut (4e) auf der der Dichtfläche (4h) abgewendeten Seite in den Anschlußflansch (40) eingreift und diesen einschnürt, und
• **daß** die Nut (4e) wenigstens einen Druckring (5) aufnimmt, der mittels einer umlaufenden Druckkante (3c) an einem von der Ventilstange (6) durchdrungenen Gehäuseoberteil (3) in der Nut (4e) verpreßt ist.

8. Hubventil nach Anspruch 7, **dadurch gekennzeichnet, daß** die Druckkante (3c) beiderseits jeweils von einer umlaufenden ringförmigen Ausgleichskammer (3a bzw. 3b) flankiert wird, die den von der Nut (4e) und der Druckkante (3c) begrenzten Raum unmittelbar erweitern.

9. Hubventil nach einem der Ansprüche 1 bis 8, **dadurch gekennzeichnet, daß** dieser und das sich anschließende Befestigungsteil (4f) innenseits mit einer Ventilstangenbohrung (4k) versehen sind, die die Ventilstange (6) mit einem die Funktionsfähigkeit gewährleistenden Minimalspiel umschließt.

10. Hubventil nach einem der Ansprüche 1 bis 9, **dadurch gekennzeichnet, daß** das Befestigungsteil (4f) beschädigungsfrei lösbar mittelbar oder unmittelbar im Gehäuse (1a) verankert ist.

11. Hubventil nach einem der Ansprüche 1 bis 10, **dadurch gekennzeichnet, daß** das Befestigungsteil (4f) nicht beschädigungsfrei lösbar mittelbar oder unmittelbar im Gehäuse (1a) verankert ist.

12. Hubventil nach Anspruch 10 oder 11, **dadurch gekennzeichnet, daß** das Befestigungsteil (4f) kraft- undloder formschlüssig mittelbar oder unmittelbar im Gehäuse (1a) verankert ist.

13. Hubventil nach Anspruch 12, **dadurch gekennzeichnet, daß** das Befestigungsteil (4f) mittelbar oder unmittelbar im Gehäuse (1a) eingeschraubt ist, vorzugsweise mit einem Trapezgewinde (1n).

14. Hubventil nach Anspruch 12, **dadurch gekennzeichnet, daß** das Befestigungsteil (4f) durch ein formschlüssiges Sicherungselement (9) mittelbar oder unmittelbar im Gehäuse (1a) verankert ist.

15. Hubventil nach Anspruch 12, **dadurch gekennzeichnet, daß** das Befestigungsteil (4f) durch haken- oder widerhakenförmigen Formschluß mittelbar oder unmittelbar im Gehäuse (1a) verankert ist.

16. Hubventil nach Anspruch 14, **dadurch gekennzeichnet, daß** das Befestigungsteil (4f) auf der dem Balg (4b) abgewandten Seite der Verschlußplatte (4c) in Form von mehreren, vorzugsweise gleichmäßig über den Umfang der Verschlußplatte (4c) verteilten Zughaken ausgebildet ist, die die Ventilstange (6) konzentrisch umschließen und die sich mit ihren als Haken ausgebildeten freien Enden auf einer Stützfläche (3e), die von einer ringförmigen Ausnehmung (3f) in einem Gehäuseoberteil (3) bzw. im Gehäuse (1a) gebildet wird, abstützen.

17. Hubventil nach einem der Ansprüche 1 bis 16, **dadurch gekennzeichnet, daß** jeweils der stangennahe Bereich einer Balgfalte (40b) des Balges (4b) eine diesen Bereich ringförmig dauerhaft stützende Armierung (8;8*) aufweist.

18. Hubventil nach Anspruch 12, **dadurch gekennzeichnet, daß** die Armierung (8;8*) aus einem Material besteht, das
• temperaturbeständig ist,
• eine geringe plastische Duktilität und
• einen geringen Reibungskoeffizienten gegenüber dem Material der Stange (6) besitzt.

19. Hubventil nach Anspruch 17 oder 18, **dadurch gekennzeichnet, daß** die Armierung (8;8*) die Balgfalte (40b) von innen berandet.

20. Hubventil nach einem der Ansprüche 17 bis 19, **dadurch gekennzeichnet, daß** die Armierung (8;8*) stoffschlüssig mit dem Material des Balges (4b) verbunden ist.

21. Hubventil nach einem der Ansprüche 17 bis 19, **dadurch gekennzeichnet, daß** die Armierung (8;8*) form- und/oder kraftschlüssig mit dem Material des Balges (4b) verbunden ist.

## Claims

1. A lifting valve, which is equipped with a closing component (4a) interacting with a valve-box end seating surface (1e; 2a) wherein the latter is connected, via a valve rod (6) led out of a box (1a), to a servo-drive (13), with a bellows (4b) for sealing the valve rod passage, especially formed as an expansion bellows or corrugated tube (4b) which coaxially encircles the valve rod (6) and which is connected to the closing component (4a) on one side and, at its free end, has a connecting flange (40) including a conical sealing surface (4h) on the other side which bears against a complementary annular seating surface (1k) of the box (1a), and wherein the closing component (4a), the bellows (4b), and its connecting flange (40) define an integral, exchangeable closing-member unit (4), **characterized in that** the connecting flange (40) of the closing-member unit (4),
• in the region where it is connected to the bellows (4b), has a fastening component (4f) supported on the box side to absorb, in a way free from bending moments to a very large extent, the forces resulting from the valve-lift induced deformation of the bellows (4b) and/or the respective pressure in the box (1a), and,
• in the region of its conical sealing surface (4h), is reduced to a minimal wall thickness meeting the strength-related requirements, in the form of a diaphragm-shaped sealing element (41),
• and that the diaphragm-shaped sealing element (41), on its side facing away from the conical sealing surface (4h) has at least one biased elastic thrust ring (5) which presses the sealing surface (4h) onto the complementary annular seating surface (1k).

2. The lifting valve according to claim 1, **characterized in that** the diaphragm-shaped sealing element (41) is shaped in the form of a prolongation oriented towards the complementary annular seating surface (1k) on a closing plate (4c) of the connecting flange (40) wherein the closing plate (4c) radially extends from the inside of the bellows (4b) and radially extends outwardly in a substantially disk-shaped form in a plane perpendicular to the axis of the valve rod (6).

3. The lifting valve according to claim 2, **characterized in that** a supporting body (30) is provided,
• which is received coaxially to the valve rod (6) in an upper box aperture (1d) of the box (1a) and is axially supported on a stop surface (1f) adjacent to the box aperture (1d) in the direction oft the interior of the box (1a) and is also supported directly or indirectly on the box (1a) in the opposed direction,
• which receives and partially encircles the thrust ring (5) in a groove-shaped recess (30a) which adjoins the surface area of the box aperture (1d),
• which, extending from the recess (30a), supports the closing plate (4c) from outside in its further radial range of extension as seen in an axial direction, and
• which, radially at the inside, supports the first fastening component (4f) from inside, as seen in an axial direction, preferably via a positive-fit connection.

4. The lifting valve according to claim 2 or 3, **characterized in that** the diaphragm-shaped sealing element (4) lengthens to form a annular collar (4g) extending in the direction of the valve rod (6) while widening to the shape of a wedge, and that the collar (4g) is received between the supporting ring (30) and the surface area of the box aperture (1d).

5. The lifting valve according to claim 4, **characterized in that** the collar (4g), as seen in an axial direction, is acted on at its end side by an elastic second thrust ring (5*) which is squeezed by the supporting ring (30) in conjunction with the surface area of the upper box aperture (1d).

6. The lifting valve according to claim 4 or 5, **characterized in that** the surface area of the upper box aperture (1d) has formed in it a leakage cavity (1h) annularly encircling the collar (4g) which is connected to the environment of the lifting valve (1) through at least one joining duct (1i).

7. The lifting valve according to claim 1, **characterized in that**
• the diaphragm-shaped sealing element (41) is formed by the fact that a continuous groove (4e) engages and constrains the connecting flange (40) on the side facing away from the sealing surface (4h), and
• the groove (4e) receives at least one thrust ring (5) which is squeezed by means of a continuous thrust edge (3c) in the groove (4e) on a box top (3) traversed by the valve rod (6).

8. The lifting valve according to claim 7, **characterized in that** the thrust edge (3c) is flanked on either side by a continuous annular balancing chamber (3a and 3b, resp.) which directly widen the space defined by the groove (4e) and the thrust edge (3c).

9. The lifting valve according to any one of claims 1 to 8, **characterized in that** this one and the fastening component (4f) which joins it are equipped, at their insides, with a valve rod bore (4k) which encircles the valve rod (6) at a minimal clearance ensuring its functionality.

10. The lifting valve according to any one of claims 1 to 9, **characterized in that** the fastening component (4f) is releasably anchored, with no damage involved, indirectly or directly in the box (1a).

11. The lifting valve according to any one of claims 1 to 10, **characterized in that** the fastening component (4f) is releasably anchored, with a damage involved, indirectly or directly in the box (1a).

12. The lifting valve according to claims 10 or 11, **characterized in that** the fastening component (4f) is anchored indirectly or directly in the box (1a) in a non-positive fit and/or a positive-fit connection.

13. The lifting valve according to claim 12, **characterized in that** the fastening component (4f) is screwed indirectly or directly into the box (1a), preferably by means of an acme thread (1n).

14. The lifting valve according to claim 12, **characterized in that** the fastening component (4f) is anchored directly or indirectly in the box (1a) by a positive-fit securing element (9).

15. The lifting valve according to claim 12, **characterized in that** the fastening component (4f) is anchored indirectly or directly in the box (1a) by a hook-shaped or barb-shaped positive-fit connection.

16. The lifting valve according to claim 14, **characterized in that** the fastening component (4f) is formed in the shape of several drawhooks preferably spaced uniformly across the circumference of the closing plate (4c) on the side of the closing plate (4c) facing away from the bellows (4b), which drawhooks concentrically encircle the valve rod (6) and are supported, at their free ends formed as hooks, on a supporting surface (3e) which is defined by a annular recess (3f) in a box top (3) and the box (1a).

17. The lifting valve according to any one of claims 1 to 16, **characterized in that** the each region of a bellows fold (40b) adjoining the rod of the bellows (4b) has a reinforcement (8, 8*) which durablely supports this region in an annular way.

18. The lifting valve according to claim 12, **characterized in that** the reinforcement (8, 8*) consists of a material which
• is temperature-resistant,
• is of a low plastic ductility, and
• has a low coefficient of friction towards the material of the rod (6).

19. The lifting valve according to claim 17 or 18, **characterized in that** the reinforcement (8, 8*) borders the bellows fold (40b) from the inside.

20. The lifting valve according to any one of claims 17 to 19, **characterized in that** the reinforcement (8, 8*) is connected to the material of the bellows (4b) in a material-fit connection.

21. The lifting valve according to any one of claims 17 to 19, **characterized in that** the reinforcement (8, 8*) is connected to the material of the bellows (4b) in a positive-fit and/or non-positive fit connection.

## Revendications

1. Soupape à levée rectiligne, équipée d'un élément d'obturation (4a) agissant conjointement avec un siège (1e ; 2a) situé au niveau du boîtier de soupape, moyennant quoi cet élément d'obturation est relié à une servocommande (13) via une tige de soupape (6) guidée hors d'un boîtier (1a), avec un soufflet (4b) pour l'étanchéité du passage de la tige de soupape, conçu en particulier comme un soufflet à plis ou un tuyau ondulé (4b), lequel entoure la tige de soupape (6) sur le plan coaxial et est relié d'un côté à l'élément d'obturation (4a), tandis qu'il présente de l'autre côté, au niveau de son extrémité libre, une bride de raccordement (40) avec une surface conique d'étanchéité (4h), laquelle est en appui contre un siège annulaire (1k) complémentaire du boîtier (1a), et moyennant quoi l'élément d'obturation (4a), le soufflet (4b) et sa bride de raccordement (40) forment une unité d'organe de fermeture (4) monobloc et interchangeable, **caractérisée en ce que** la bride de raccordement (40) de l'unité d'organe de fermeture (4) présente :
dans la zone de sa liaison avec le soufflet (4b) un élément de fixation (4f) en appui du côté du boîtier, pour la réception, en grande partie sans couple de flexion, des forces résultant de la déformation du soufflet (4b) provoquée par la levée de la soupape et/ou de celles résultant de la pression respective à l'intérieur du boîtier (1a) et
dans la zone de sa surface conique d'étanchéité (4h) une épaisseur de paroi réduite minimale correspondant aux exigences de résistance sous la forme d'un élément d'étanchéité (4l) du type membrane ;
et **en ce que** l'élément d'étanchéité (4l) du type membrane présente, au niveau de son côté opposé à la surface conique d'étanchéité (4h), au moins une bague de pression (5) élastique, précontrainte, qui comprime la surface d'étanchéité (4h) sur le siège annulaire (1k) complémentaire.

2. Soupape à levée rectiligne selon la revendication 1, **caractérisée en ce que** l'élément d'étanchéité (4l) du type membrane est conçu sous la forme d'un prolongement orienté en direction du siège annulaire (1k) complémentaire, au niveau d'une plaque d'obturation (4c) de la bride de raccordement (40), moyennant quoi la plaque d'obturation (4c), sur le plan radial du côté intérieur, sort du soufflet (4b) et s'étend sur le plan radial vers l'extérieur sensiblement sous forme de disque dans un plan perpendiculaire à l'axe de la tige de soupape (6).

3. Soupape à levée rectiligne selon la revendication 2, **caractérisée en ce qu'**il est prévu un corps d'appui (30) :
qui prend place dans une ouverture supérieure (1d) du boîtier (1a), sur un plan coaxial par rapport à la tige de soupape (6), et s'appuie de manière axiale, en direction de l'intérieur du boîtier (1a), sur une surface de butée (1f) contiguë à l'ouverture du boîtier (1d), et dans le sens opposé, indirectement ou directement, également au niveau du boîtier (1a) ;
qui reçoit la bague de pression (5) dans un évidement (30a) en forme de rainure, voisin de la surface périphérique de l'ouverture du boîtier (1d) et entoure partiellement ladite bague ;
qui, dans son autre zone d'extension radiale, en partant de l'évidement (30a), supporte de l'extérieur la plaque d'obturation (4c), vu sur le plan axial, et
qui, sur le plan radial du côté intérieur, de préférence via un assemblage par complémentarité de forme, supporte de l'intérieur le premier élément de fixation (4f), vu sur le plan axial.

4. Soupape à levée rectiligne selon la revendication 2 ou 3, **caractérisée en ce que** l'élément d'étanchéité (4l) du type membrane se prolonge par une collerette (4g) annulaire s'étendant en direction de la tige de soupape (6) et s'élargit ainsi de manière cunéiforme, et **en ce que** cette collerette (4g) prend place entre la bague d'appui (30) et la surface périphérique de l'ouverture du boîtier (1d).

5. Soupape à levée rectiligne selon la revendication 4, **caractérisée en ce que** la collerette (4g), vue sur le plan axial, est sollicitée au niveau de son extrémité par une deuxième bague de pression (5*) élastique, laquelle est comprimée par la bague d'appui (30) en liaison avec la surface périphérique de l'ouverture supérieure du boîtier (1d) .

6. Soupape à levée rectiligne selon la revendication 4 ou 5, **caractérisée en ce qu'**une cavité de fuites (1h), entourant la collerette (4g) de maniéré circulaire, est conçue dans la surface périphérique de l'ouverture supérieure du boîtier (1d), ladite cavité est reliée aux composants environnants de la soupape à levée rectiligne (1) par au moins un canal de liaison (1i).

7. Soupape à levée rectiligne selon la revendication 1, **caractérisée en ce que** :
l'élément d'étanchéité (4l) du type membrane est formée par le fait qu'une rainure (4e) périphérique située sur le côté opposé à la surface d'étanchéité (4h) s'engage dans la bride de raccordement (40) et rétrécit celle-ci et
**en ce que** la rainure (4e) reçoit au moins une bague de pression (5), qui est comprimée dans la rainure (4e) à l'aide d'une arête de pression (3c) périphérique, au niveau d'une partie supérieure du boîtier (3) traversée par la tige de soupape (6).

8. Soupape à levée rectiligne selon la revendication 7, **caractérisée en ce que** l'arête de pression (3c) est flanquée de chaque côté d'une chambre d'équilibrage (3a ou 3b) périphérique et de forme annulaire, lesdites chambres élargissant directement l'espace délimité par la rainure (4e) et l'arête de pression (3c).

9. Soupape à levée rectiligne selon l'une quelconque des revendications 1 à 8, **caractérisée en ce que** cet élément et la partie de fixation (4f) s'y raccordant sont munis du côté intérieur d'un alésage pour la tige de soupape (4k), qui entoure la tige de soupape (6) avec un jeu minimum garantissant son bon fonctionnement.

10. Soupape à levée rectiligne selon l'une quelconque des revendications 1 à 9, **caractérisée en ce que** la partie de fixation (4f) est ancrée directement on indirectement dans le boîtier (1a) et peut être retirée sans endommagement.

11. Soupape à levée rectiligne selon l'une des revendications 1 à 10, **caractérisée en ce que** la partie de fixation (4f) est ancrée directement on indirectement dans le boîtier (1a) et ne peut pas être retirée sans endommagement.

12. Soupape à levée rectiligne selon la revendication 10 ou 11, **caractérisée en ce que** la partie de fixation (4f) est ancrée directement on indirectement dans le boîtier (1a) par force et/ou complémentarité de forme.

13. Soupape à levée rectiligne selon la revendication 12, **caractérisée en ce que** la partie de fixation (4f) est vissée directement on indirectement dans le boîtier (1a), de préférence à l'aide d'un filetage trapézoïdal (1).

14. Soupape à levée rectiligne selon la revendication 12, **caractérisée en ce que** la partie de fixation (4f) est ancrée directement on indirectement dans le boîtier (1a) au moyen d'un élément de sécurité (9) complémentaire au niveau de la forme.

15. Soupape à levée rectiligne selon la revendication 12, **caractérisée en ce que** la partie de fixation (4f) est ancrée directement on indirectement dans le boîtier (1a) par un assemblage par emboîtement en forme de crochet ou d'ardillon.

16. Soupape à levée rectiligne selon la revendication 14, **caractérisée en ce que** la partie de fixation (4f), sur le côté éloigné du soufflet (4b), de la plaque d'obturation (4c), est réalisée sous la forme de plusieurs crochets de traction répartis de préférence de manière régulière sur la périphérie de la plaque d'obturation (4c), lesdits crochets de traction entourent la tige de soupape (6) de manière concentrique et s'appuient, avec leurs extrémités libres conçues comme des crochets sur une surface de support (3e), qui est formée par un évidement (3f) annulaire dans une partie supérieure du boîtier (3) ou dans le boîtier (1a).

17. Soupape à levée rectiligne selon l'une quelconque des revendications 1 à 16, **caractérisée en ce que** respectivement la zone, proche de la tige, d'un pli (40b) du soufflet (4b), présente une armature (8 ; 8*), qui fournit à cette zone un support annulaire et durable.

18. Soupape à levée rectiligne selon la revendication 12, **caractérisée en ce que** l'armature (8 ; 8*) est constituée d'un matériau :
résistant à la température,
présentant une faible ductilité plastique,
et présente un faible coefficient de frottement par rapport au matériau de la tige (6).

19. Soupape à levée rectiligne selon la revendication 17 ou 18, **caractérisée en ce que** l'armature (8 ; 8*) borde le pli du soufflet (40b) de l'intérieur.

20. Soupape à levée rectiligne selon l'une des revendications 17 à 19, **caractérisée en ce que** l'armature (8 ; 8*) est reliée au matériau du soufflet (4b) grâce à l'adhésion par matière.

21. Soupape à levée rectiligne selon l'une des revendications 17 à 19, **caractérisée en ce que** l'armature (8 ; 8*) est reliée au matériau du soufflet (4b) par complémentarité de forme et/ou par force.
